# EUROPEAN PATENT APPLICATION

(11) **EP 0 573 163 A2**
(43) Date of publication of application: **08.12.1993**
(21) Application number: 93303779.8
(22) Date of filing: 17.05.1993
(51) Int. Cl.: G02B 5/08, G02B 1/10

(54) **Enhanced durability optical stack such as a mirror and a process for forming the stack**

(30) Priority: 05.06.1992 US 894018
(71) Applicant: OPTICAL COATING LABORATORY, INC., Santa Rosa, California 95407-7397 (US)
(72) Inventor: Engel, Timothy C., Santa Rosa, California 95402 (US)
(74) Representative: Bayliss, Geoffrey Cyril

(57) **Abstract**

A durable sputtered front surface mirror comprises a substrate; a reflective aluminum coating formed on one side of the substrate; a silicon oxide coating formed on the aluminum; a titanium oxide coating formed on the silicon oxide; and a thin overcoat formed on the titanium oxide coating. The overcoat is formed using sputter deposition conditions for depositing silicon oxide, silicon nitride, and/or silicon oxynitride, and is formed using process parameters that can be expected to form a very thin coating, which will not degrade the optical qualities of the mirror.

## Description

The present invention relates to optical coatings formed by physical deposition processes, to mirrors, to mirrors formed by sputter coating layers on a substrate such as glass and, in particular, to sputtered mirrors and to sputtered front surface mirrors having enhanced surface durability.

Conventional sputtered mirrors comprise layers such as Al/SiO₂/TiO₂ which are sputter deposited sequentially on either the front, viewing side of a substrate of glass or other suitable material (front surface mirrors), or on the rear or second surface of the substrate (second surface mirrors). In the exemplary coating construction, aluminum provides reflectance of about 89%, and SiO₂ and TiO₂ enhance the basic reflectance, for example, to about 95-96% peak reflectance.

It is well known in the industry that TiO₂, the top (outermost) layer in the stack, has very low abrasion resistance. For example, it has been found that the frequently used glass/Al/SiO₂/TiO₂ construction fails the 200 cheesecloth abrasion resistance standard used by the assignee. This abrasion resistance test, which uses the methodology of military specification MIL-M-13508C, paragraph 4.4.5, involves rubbing the mirror 200 times using a 3/8 inch diameter, 1/2 inch thick cheesecloth with a force of 1 + 0.25 pounds. In fact, such mirrors frequently fail even a 20 rub test. Because of the low durability of the soft TiO₂ second surface mirrors are preferred where the front surface is periodically cleaned or is otherwise subject to abrasion or rubbing during use. Typical applications for second surface mirrors are in residences, restrooms, etc. However, in numerous applications, such as in xerographic copiers and cameras, the need for distortion-free optical characteristics dictates the use of front surface mirrors, despite the low abrasion resistance of the TiO₂ component.

In one aspect, the invention is embodied in a wear resistant optical stack comprising an optical coating and a very thin overcoat formed on the coating. The overcoat is selected to enhance the adhesion resistance of the coating, despite the thinness of the overcoat, without degrading the optical performance of the coating.

In another non-exhaustive aspect, the invention is embodied in a mirror which comprises a penultimate layer of TiO₂ and a thin overcoat that is deposited on the TiO₂ using a physical deposition process, for example, sputter deposition, which conventionally forms material selected from silicon oxide, silicon nitride and/or silicon oxynitride. Surprisingly, the thin overcoat provides greatly increased abrasion resistance, while maintaining the optical performance provided by the mirror and its reflectance-enhancing, TiO₂ coating.

In yet another non-exhaustive, method aspect, invention is embodied in a process for forming a wear resistant optical stack, comprising forming at least one optical coating on a substrate and depositing a very thin overcoat on the optical coating for enhancing the abrasion resistance of the optical coating without degrading the optical performance thereof.

The above and other aspects of the invention are described below with respect to the drawing, in which:
FIG. 1 is a schematic depiction of an in-line sputtering system suitable for forming mirrors which embody my invention;
FIG. 2 depicts the actual and theoretical reflectance of mirrors embodying my invention;
FIGS. 3 and 4 depict theoretical thin film analysis for an SiOₓN_{y} overcoat mirror construction for overcoat thicknesses of 100 Angstroms and 200 Angstroms, respectively; and
FIG. 5 depicts the effect in phase space of the overcoat embodying my invention.

### a) Overview of Mirror Design andConstruction

The present invention is embodied in an overcoat (and the resulting mirror) for mirrors containing TiO₂. The overcoat imparts excellent abrasion resistance to the mirror, without degrading optical performance (reflectance). As a result, front surface mirrors with their attendant superior optical performance characteristics can be used in applications which normally require the durability of rear surface mirrors. That is, the mirrors which embody the invention provide excellent abrasion resistance and are substantially as distortion-free as mirrors without the overcoat.

In a preferred embodiment, the mirror comprises the TiO₂ reflectance-enhancing outer coating and a very thin overcoat, which imparts excellent abrasion resistance characteristics to the mirror, despite the inherent softness of the TiO₂. In fact, abrasion resistance of 10,000 cheesecloth rubbing cycles is readily achieved.

It is not precisely understood how this surprising combination of formerly mutually exclusive optical and physical characteristics is achieved. However, it is theorized that constituent(s) in the overcoat layer deposited by a physical deposition process, such as sputtering, may react with constituent(s) in the TiO₂ to form a hard, optically benign layer. For example, nitrogen in the overcoat materials SiₓN_{y} (such as Si₃N₄) or in SiₓO_{y}N_{z} may partially or wholly convert the TiO₂ to TiNₓ The nitrogen may convert a thin surface region of the TiO₂ to TiNₓ Although a thick TiNₓ layer would degrade reflectance, the material is very hard. Thus, formation of a very thin layer, perhaps even one which is only a few monolayers thick, provides the observed excellent abrasion resistance without harming reflectance.

In a preferred embodiment, the mirror construction is substrate/Al/SiO₂/TiO₂/overcoat/air. Typically, the TiO₂ is 400 - 600 Angstroms thick. The overcoat is 50 - 200 Angstroms thick; test results (see below) indicate that overcoat layers thicker than about 200 Angstroms can degrade reflectance.

As mentioned, the overcoat is formed by using SiO₂, Si₃N₄, or SiOₓN_{y} physical deposition processes. We use the phrase "physical deposition processes" advisedly, rather than specifying that the overcoat is SiO₂, Si₃N₄, or SiOₓN_{y} here, to emphasize the possibility that the deposition process causes a reaction with the TiO₂ to wholly or partially convert the overcoat to an abrasion resistant layer such as TiNₓ.

### b) Mirror Fabrication Process

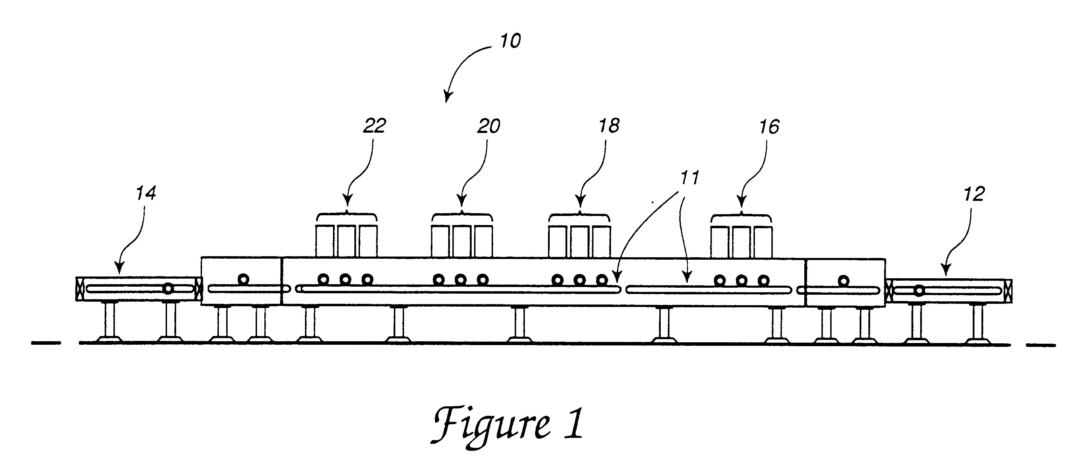

The mirror preferably is formed using a commercially available in-line, multi-station sputter system 10 such as the in-line sputter coater system available from Airco Inc., of Concord, California. As is depicted schematically in FIG. 1, this system comprises a conveyor system 11, input and output load lock stations 12 and 14, and four intermediate processing stations 16, 18, 20 and 22. Each processing station comprises a sputter system for sputter depositing a metal or for sputter depositing metal and converting the deposited/as-depositing metal to oxide, nitride, oxynitride, etc. Presently, the system uses CMAG rotating cylindrical magnetron type sputter devices which are oriented transverse to (across) the conveyor. Each process chamber is approximately 14 inches wide by 48 inches long by 12 inches high.

In operation, the conveyor 11 is used to translate glass substrates sequentially through the stations 16, 18, 20 and 22, which are operated to deposit Al, SiO₂, TiO₂, and the overcoat layer, respectively, in sequence. Presently, for silicon oxynitride deposition, aluminum station 16 and TiO₂ station 20 use single CMAG sputter devices, while SiO₂ station 18 and overcoat station 22 incorporate three CMAG devices located at spaced positions along the direction of conveyor travel.

### c) Examples

TABLE 1 depicts the presently preferred CMAG power, chamber pressure, gas and associated flow rates, and conveyor line speed parameters for sequentially forming the aluminum, silica, titania, and silicon oxynitride overcoat layers on 32 in. by 50 in. mirrors. The power data indicates the number of CMAG sputter devices used and the power to each.

**TABLE 1**

| **Deposition Parameters, Silicon Oxynitride Overcoat** | | | | |
|---|---|---|---|---|
| Layer | Al | SiO₂ | TiO₂ | SiOₓN_{y} |
| Parameter | | | | |
| Power (kw) | 50 | 20/20/20 | 43 | 15/15/15 |
| Press (10⁻³ torr) | 3.5 | 2.5 | 2.5 | 1.7 |
| Gas | Ar | O₂ | O₂ | N₂O/N₂ |
| Flow Rate (sccm) | 240 | 450 | 300 | 290/30 |
| Line Speed (cm/min) | 280 | 73 | 16 | 1300 |

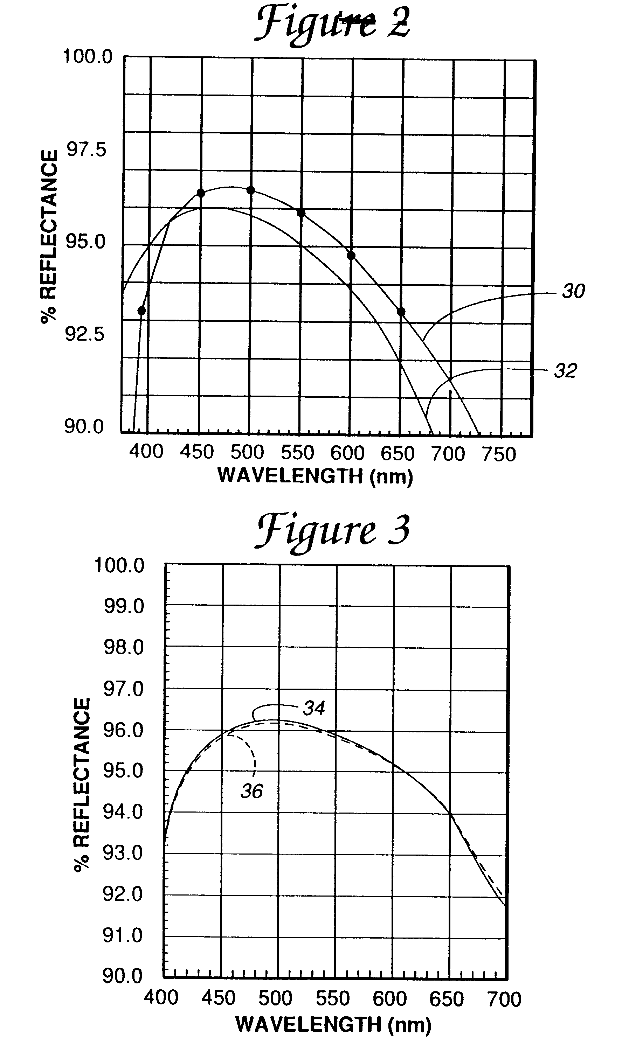

As indicated by the FIG. 2 graphs 30 and 32 for actual and theoretical reflectance, respectively, the reflectance of the resulting mirrors is very close to (and even somewhat better than) theoretical values. Reflectance degradation is less than 0.5%. In addition, the mirrors pass the 10,000 cheesecloth abrasion resistance standard. In contrast, using the same process to form Al/SiO₂/TiO₂ without the overcoat provided mirrors which failed to withstand even a 20 cheesecloth abrasion resistance test.

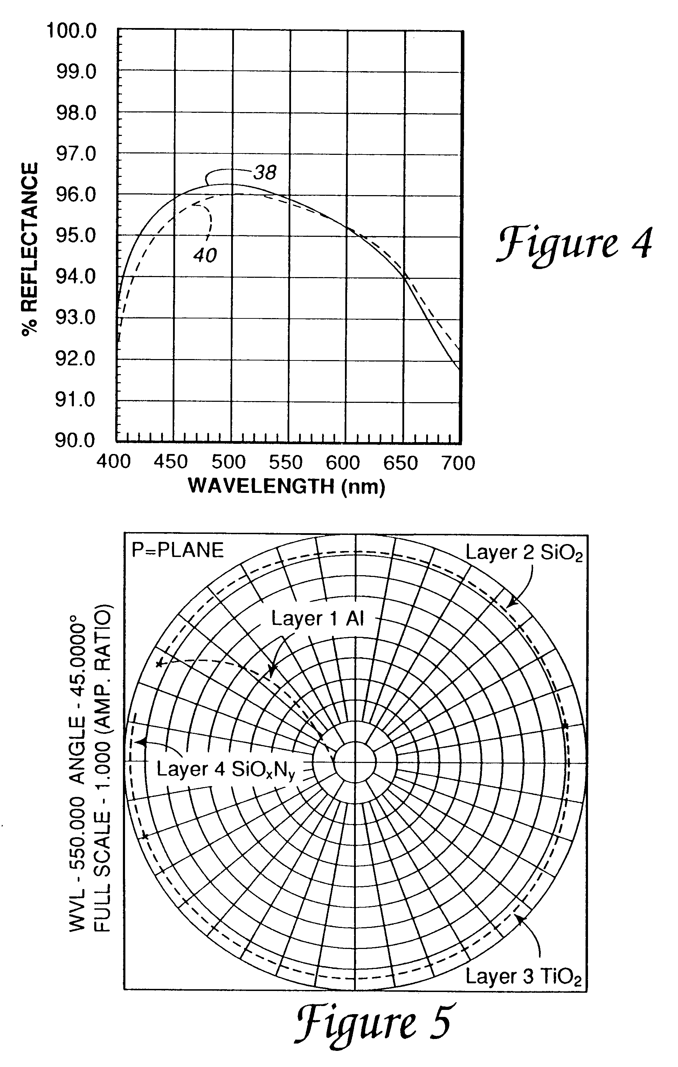

FIGS. 3 and 4 depict theoretical thin film analysis for SiOₓN_{y} overcoat mirror construction for overcoat thicknesses of 100 Angstroms and 200 Angstroms, respectively. In FIG. 3, graph 34 discloses reflectance for mirrors without an overcoat, while graph 36 is associated with silicon oxynitride overcoated mirrors. Similarly, in FIG. 4, graphs 38 and 40 are for mirrors wihtout any overcoat and those with a silicon oxynitride overcoat, respectively. Degradation in reflectance is negligible for the 100 Angstrom thick overcoat (FIG. 3) and is 0.5% for the 200 Angstrom thick overcoat (FIG. 4). FIG. 5 depicts the effect in phase space of the overcoat.

TABLE 2 discloses the parameters for sputter depositing a silicon nitride overcoat on the TiO₂ outer coat of front surface mirrors. Although the test results are not characterized here, the silicon nitride overcoat also provided excellent abrasion resistance without degrading reflectance.

**TABLE 2**

| **Deposition Parameters, Silicon Nitride Overcoat** | | | | |
|---|---|---|---|---|
| Layer | Al | SiO₂ | TiO₂ | SiₓN_{y} |
| Parameter | | | | |
| Power (kw) | 50 | 15/15 | 43/43/43 | 2 |
| Press (10⁻³ torr) | 3.5 | 2.5 | 2.5 | 2.5 |
| Gas | Ar | O₂ | O₂ | N₂ |
| Flow Rate (sccm) | 240 | 450 | 300 | 400 |
| Line Speed (cm/min) | 380 | 53 | 53 | 53 |

Based upon the above disclosure of preferred and alternative embodiments of the invention, those of usual skill in the art will readily derive alternatives and implement modifications which are equivalent to the invention and within the scope of the Claims of this patent document. For example, and as discussed above, the invention is not Limited to mirrors or to sputtered mirrors, but also applies to optical coatings and to physical deposition processes in general.

## Claims

1. A wear resistant optical stack, comprising at least one optical coating and a very thin overcoat formed on the optical coating for enhancing the abrasion resistance of the optical coating without degrading the optical performance thereof.

2. The stack of Claim 1, wherein the optical coating is TiO₂ and the overcoat is formed by at least one of silicon oxide, silicon nitride and silicon oxynitride physical deposition techniques, for enhancing the abrasion of the TiO₂ without degrading the reflectance thereof.

3. The stack of Claim 2, wherein the thickness of the overcoat is within the range 50-200 Angstroms.

4. A mirror comprising a substrate; a reflective stack formed on the substrate, the stack comprising an outermost layer of titanium oxide; and a thin overcoating formed on the titanium oxide by at least one of silicon oxide, silicon nitride and silicon oxynitride deposition techniques.

5. The mirror of Claim 4, wherein the thin coating is silicon oxide.

6. The mirror of Claim 4, wherein the thin coating is silicon nitride.

7. The mirror of Claim 4, wherein the thin coating is silicon oxynitride.

8. An abrasion resistant mirror, comprising:
a substrate;
a reflective aluminum coating formed on one side of the substrate;
a silicon oxide coating formed on the aluminum;
a titanium oxide coating formed on the silicon oxide; and
a thin overcoat selected from silicon oxide, silicon nitride and silicon oxynitride formed on the titanium oxide coating.

9. The mirror of Claim 8, wherein the overcoat is silicon oxide.

10. The mirror of Claim 8, wherein the overcoat is silicon nitride.

11. The mirror of Claim 8, wherein the overcoat is silicon oxynitride.

12. The mirror of Claim 8, wherein the thickness of the overcoat is within the range 50-200 Angstroms.

13. A process for forming a wear resistant optical stack, comprising forming at least one optical coating on a substrate and depositing a very thin overcoat on the optical coating for enhancing the abrasion resistance of the optical coating without degrading the optical performance thereof.
